# EUROPÄISCHE PATENTSCHRIFT

(11) **EP 1 865 029 B1**
(45) Veröffentlichungstag und Bekanntmachung des Hinweises auf die Patenterteilung: **24.02.2010**
(21) Anmeldenummer: 07109298.5
(22) Anmeldetag: 31.05.2007
(51) Int. Cl.: C08L 83/00, C08L 83/04

(54) **Vernetzbare Massen auf der Basis von Organosiliciumverbindungen**
Crosslinkable compositions based on organosilicon compounds
Compositions réticulables à base d'organosilicones

(30) Priorität: 06.06.2006 DE 102006026227
(43) Veröffentlichungstag der Anmeldung: 12.12.2007
(73) Patentinhaber: Wacker Chemie AG, 81737 München (DE)
(72) Erfinder: Schöley, Peter, 01665, Diera-Zehren (DE); Dineiger, Gabriele, 01662, Meißen (DE); Scheim, Uwe, 01640, Coswig (DE)
(74) Vertreter: Budczinski, Angelika

(56) Entgegenhaltungen:
- EP-A- 0 400 439
- CH-A- 416 896
- US-A- 3 451 833

## Beschreibung

Die Erfindung betrifft vernetzbare Massen auf der Basis von Organosiliciumverbindungen mit sehr hoher Lagerstabilität, Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Dichtmassen (RTV-1) sind seit langem bekannt. Diese Produkte werden in großen Mengen zum Beispiel in der Bauindustrie, eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen, tragen. Des Weiteren können diese Dichtmassen Füllstoffe, Weichmacher, Vernetzer, Katalysatoren sowie Additive enthalten. Bekannte Füllstoffe sind unter anderem feinteilige Metalloxide und Metallsalze. Diese können bei Dichtmassen nicht nur ausgewählte anwendungstechnische Eigenschaften des ausgehärteten Produktes optimieren sondern auch die spezifischen Eigenschaften der Dichtmasse während der Applikation verbessern.

In EP 10104787 B wird beispielsweise die Verwendung von so genannten schweren Calciumcarbonaten, die durch Vermahlung von Kalkstein gewonnen werden, beschrieben. Des Weiteren wird in DE 195 07 416 C der Einsatz von gefällten Kreiden in RTV-1-Siliconkautschukmassen offenbart. Ebenso wird die Verwendung von gemahlenen Naturkreiden erwähnt. Als problematisch wurde dabei jedoch insbesondere die schlechte Lagerstabiltät von Alkohol abspaltenden RTV-1-Siliconkautschukmassen beschrieben, die sich durch stark verzögerte Aushärtung bei Anwendung bemerkbar macht. Beansprucht werden Zusätze von Orthophosphorsäureestern, um die Lagerstabilität zu verbessern.

Eine Verbesserung der Lagerstabilität von Alkohol abspaltenden RTV-1-Siliconkautschukmassen wird auch in DE 101 21 514 A beschrieben, wobei Zinnkatalysatoren, die koordinativ Phosphorverbindungen gebunden haben, eingesetzt werden. Hervorgehoben wird die Möglichkeit der Herstellung farbloser, transparenter RTV-1-Siliconkautschukmassen.

CH 416896, EP 0400439 und US 3451833 offenbaren Marmor als Füllstoff für Organosiliziumzusammensetzungen.

Gegenstand der Erfindung sind vernetzbare Massen auf der Basis von Organosiliciumverbindungen, dadurch gekennzeichnet, dass sie feinteiliges Metacarbonat enthalten.

Bei den vernetzbaren Massen handelt es sich um durch Kondensationsreaktion vernetzbare Massen.

Im Rahmen der vorliegenden Erfindung soll die Bezeichnung "Kondensationsreaktion" auch einen gegebenenfalls vorangehenden Hydrolyseschritt mitumfassen.

Im Rahmen der vorliegenden Erfindung sollen unter der Bezeichnung "kondensationsfähige Reste" auch solche Reste verstanden werden, die einen gegebenenfalls vorangehenden Hydrolyseschritt miteinschließen.

Bei den erfindungsgemäßen Massen handelt es sich um solche herstellbar unter Verwendung von
(A) Organosiliciumverbindung mit mindestens zwei kondensationsfähigen Gruppen,
(B) feinteiliges Metacarbonat mit einem mittleren Teilchendurchmesser von 0.1 bis 30 µm und gegebenenfalls
(C) Vernetzer.

Bei den kondensationsfähigen Gruppen, welche die eingesetzten, an der Vernetzungsreaktion beteiligten Organosiliciumverbindungen aufweisen, kann es sich um Hydroxy- und Organyloxygruppen handeln.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also =Si-O-Si= -Strukturen, als auch um Silcarbane, also ≡Si-R' '-Si≡ -Strukturen mit R' ' gleich einem zweiwertigen, gegebenenfalls substituierten oder mit Heteroatomen unterbrochenen Kohlenwasserstoffrest oder beliebigen Organosiliciumgruppen aufweisende Copolymere handeln.

Bei den erfindungsgemäß eingesetzten Organosiliciumverbindungen (A) handelt es sich um solche enthaltend Einheiten der Formel

RₐY_{b}SiO_{(4-a-b)/2} (I),

wobei
R gleich oder verschieden sein kann und gegebenenfalls substituierte Kohlenwasserstoffreste, die durch Sauerstoffatome unterbrochen sein können, bedeutet,
Y gleich oder verschieden sein kann und Hydroxylrest oder Rest -OR¹ bedeutet,
R¹ gegebenenfalls Substituierte Kohlenwasserstoffreste, die durch Sauerstoffatome unterbrocken sein können, bedeutet.
a 0, 1, 2 oder 3, bevorzugt 1 oder 2, besonders bevorzugt 2, ist und
b 0, 1, 2 oder 3, bevorzugt 0, 1 oder 2, besonders bevorzugt 0, ist,
mit der Maßgabe, dass die Summe aus a+b kleiner oder gleich 4 ist und pro Molekül mindestens zwei Reste Y anwesend sind.

Bei den erfindungsgemäßen eingesetzten Organosiliciumverbindungen (A) kann es sich sowohl um Silane handeln, d.h. Verbindungen der Formel (I) mit a+b=4, als auch um Siloxane, d.h. Verbindungen enthaltend Einheiten der Formel (I) mit a+b<3. Vorzugsweise handelt es sich bei den erfindungsgemäß eingesetzten Organosiliciumverbindungen (A) um Organopolysiloxane, insbesondere um solche, die aus Einheiten der Formel (I) bestehen.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylenund/oder Oxypropyleneinheiten aufgebaut sind, besonders bevorzugt um Kohlenwasserstoffreste mit 1 bis 12 Kohlenstoffatomen, insbesondere um den Methyl- und den Vinylrest. Es kann sich bei Rest R aber auch um zweiwertige Reste handeln, die z.B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl- und der Ethoxyethoxyethylrest.

Bei Rest Y handelt es sich um Hydroxylrest oder Rest -OR¹, wobei R¹ gegebenenfalls substituierte Kohlenwasserstoffreste, die durch Sauerstoffatome unterbrochen sein können, bedeutet, wie Methoxy-, Ethoxy-, n-Propoxy-, i-Propoxy-, n-Butoxy-, i-Butoxy-, s-Butoxy-, tert-Butoxy-, 2-Methoxyethoxy-, Hexoxy- und Octoxyrest.

Beispiele für Reste R¹ sind die für R angegebenen einwertigen Reste.

Bevorzugt handelt es sich bei Rest R¹ um Alkylreste mit 1 bis 12 Kohlenstoffatomen, besonders bevorzugt um den Methyl- oder Ethylrest.

Besonders bevorzugt handelt es sich bei Rest Y um Rest -OR¹ mit R¹ gleich der obengenannten Bedeutung, insbesondere um den Methoxy- und Ethoxyreste.

Besonders bevorzugt handelt es sich bei erfindungsgemäß eingesetzten Organosiliciumverbindungen (A) um solche der Formel

Y₃-_{f}R_{f}Si- (SiR₂-O)ₑ-SiR_{f}Y_{3-f} (II) ,

wobei
R und Y jeweils gleich oder verschieden sein können und eine der oben angegebenen Bedeutungen haben,
e gleich 30 bis 5000 ist und
f gleich 0, 1 oder 2 ist.

Vorzugsweise ist f gleich 2, wenn Y gleich Hydroxylrest ist, und f gleich 1 oder 0, wenn Y die Bedeutung von hydrolysierbarem Rest hat, wie Methoxy- oder Ethoxyrest.

Beispiele für Organosiliciumverbindungen (A) sind

(MeO) ₂MeSiO [SiMe₂O] ₂₀₀₋₂₀₀₀SiMe (OMe)₂,

(HO) Me₂SiO [SiMe ₂O] ₂₀₀₋₂₀₀₀SiMe₂(OH),

(EtO) ₂MeSiO [SiMe₂O] ₂₀₀₋₂₀₀₀SiMe (OEt)₂,

(MeO) ₂MeSiO [SiMe₂O] ₂₀₀₋₂₀₀₀SiVi (OMe) ₂

(MeO)₂ViSiO [SiMe₂O]₂₀₀₋₂₀₀₀SiVi (OMe) ₂

(EtO*)*₂ MeSiO[SiMe₂O]₂₀₀₋₂₀₀₀SiVi (OEt) und

(EtO)₂ViSiO [SiMe₂O] ₂₀₀₋₂₀₀₀SiVi (OEt)₂ ,

wobei Me Methylrest, Et Ethylrest und Vi Vinylrest bedeutet.

Die erfindungsgemäß eingesetzten Organosiliciumverbindungen (A) haben eine Viskosität von bevorzugt 10⁴ bis 10⁶ mPas, besonders bevorzugt von 10⁵ bis 500 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Bei der erfindungsgemäß eingesetzten Komponente (B) handelt es sich um feinteiliges Metacarbonat mit einem mittleren Teilchendurchmesser von 0,1 bis 30 µm, bevorzugt 1 bis 10 µm.

Die erfindungsgemäß eingesetzte Komponente (B) weist einen Gehalt an Calciumcarbonat von mindestens 90 Gew.-%, besonders bevorzugt von 95 bis 99,5 %, auf.

Die erfindungsgemäß eingesetzte Komponente (B) weist eine spezifische Oberfläche nach BET von bevorzugt höchstens 15 m²/g, besonders bevorzugt 0,1 bis 15 m²/g, insbesondere 1 bis 10 m²/g, auf.

Die erfindungsgemäß eingesetzte Komponente (B) weist eine Ölzahl (ISO 787/5) von bevorzugt mehr als 1 g/100 g, besonders bevorzugt von 10 bis 50 g/100 g, insbesondere von 10 bis 30 g/100 g, auf.

Bei der erfindungsgemäß eingesetzten Komponente (B) handelt es sich bevorzugt um feinteiligen Marmor, der durch Mahlen von natürlich vorkommendem Marmor hergestellt werden kann.

Bei der erfindungsgemäß eingesetzten Komponente (B) handelt es sich um handelsübliche Produkte.

Die Oberfläche der erfindungsgemäß eingesetzten Komponente (B) ist bevorzugt chemisch unbehandelt. Herstellungsbedingt kann die Oberfläche der Komponente (B) jedoch geringe Anteile organischer Substanzen, wie sie z.B. beim Mahlprozess eingesetzt werden, enthalten. Beispiele hierfür sind nichtionische Tenside.

Falls erwünscht, kann die Oberfläche der erfindungsgemäß eingesetzten Komponente (B) auch chemisch behandelt sein, wie beispielsweise mit Carbonsäureestern, wobei eine Behandlung mit Stearinsäure bevorzugt auszuschließen ist.

Die erfindungsgemäßen Massen enthalten Komponente (B) in Mengen von vorzugsweise 1 bis 500 Gewichtsteilen, besonders bevorzugt 10 bis 300 Gewichtsteilen, insbesondere 50 bis 200 Gewichtsteilen, jeweils bezogen auf 100 Gewichtsteile Organosiliciumverbindung (A).

Bei den in den erfindungsgemäßen Massen gegebenenfalls eingesetzten Vernetzern (C) kann es sich um beliebige, bisher bekannte Vernetzer mit mindestens zwei kondensationsfähigen Resten handeln, wie beispielsweise Silane oder Siloxane mit mindestens zwei Organyloxygruppen.

Bei den in den erfindungsgemäßen Massen gegebenenfalls eingesetzten Vernetzern (C) handelt es sich vorzugsweise um Organosiliciumverbindungen der Formel

Z_{c}SiR²_{(4-c)} (III),

wobei
R² gleich oder verschieden sein kann und einwertige, gegebenenfalls substituierte Kohlenwasserstoffreste, die durch Sauerstoffatome unterbrochen sein können, bedeutet,
Z gleich oder verschieden sein kann und eine oben für Y genannte Bedeutung ausgenommen Hydroxylgruppe besitzt und
c 2, 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (III), wie auch um Teilcohydrolysate, d.h. Teilhydrolysate von mindestens zwei verschiedenen Arten von Organosiliciumverbindungen der Formel (III).

Obwohl in Formel (III) nicht angegeben, können die erfindungsgemäß gegebenenfalls eingesetzten Organosiliciumverbindungen herstellungsbedingt einen geringen Anteil von Hydroxylgruppen, bevorzugt bis maximal 5 % aller Si-gebundenen Reste, aufweisen.

Handelt es sich bei den in den erfindungsgemäßen Massen gegebenenfalls eingesetzten Vernetzern (C) um Teilhydrolysate von Organosiliciumverbindungen der Formel (III), so sind solche mit bis zu 10 Siliciumatomen bevorzugt.

Beispiele für Rest R² sind die oben für Rest R genannten einwertigen Beispiele, wobei Kohlenwasserstoffreste mit 1 bis 12 Kohlenstoffatomen bevorzugt und der Methyl- und der Vinylrest besonders bevorzugt sind.

Beispiele für Z sind die für Y angegebenen Beispiele ausgenommen Hydroxylgruppe.

Bevorzugt handelt es sich bei Rest Z um Reste -OR¹ mit R¹ gleich der obengenannten Bedeutung, insbesondere um Methoxy- und Ethoxyreste.

Bevorzugt handelt es sich bei den in den erfindungsgemäßen Massen gegebenenfalls eingesetzten Vernetzern (C) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan, 1,2-Bis(triethoxysilyl)ethan, (N-Cyclohexylaminomethyl)triethoxysilan, (N-Cyclohexylaminomethyl)trimethoxysilan, (Methacryloxymethyl)triethoxysilan, (Methacryloxymethyl)trimethoxysilan und (Morpholinomethyl)trimethoxysilan sowie Teilhydrolysate der genannten Organosiliciumverbindungen, wie z.B. Hexaethoxydisiloxan.

Besonders bevorzugt handelt es sich bei den in den erfindungsgemäßen Massen gegebenenfalls eingesetzten Vernetzern (C) um Tetramethoxysilan, Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, sowie deren Teilhydrolysate, insbesondere um Methyltrimethoxysilan, Vinyltrimethoxysilan, Methyltriethoxysilan, Vinyltriethoxysilan und Tetraethoxysilan , (N-Cyclohexylaminomethyl)trimethoxysilan, (Morpholinomethyl)trimethoxysilan sowie deren Teilhydrolysate.

Die in den erfindungsgemäßen Massen gegebenenfalls eingesetzten Vernetzer (C) sind handelsübliche Produkte bzw. können nach in der Siliciumchemie bekannten Verfahren hergestellt werden.

Falls die erfindungsgemäßen Massen Vernetzer (C) enthalten, handelt es sich um Mengen von vorzugsweise 0,01 bis 20 Gewichtsteilen, besonders bevorzugt 0,5 bis 10 Gewichtsteilen, insbesondere 3 bis 8 Gewichtsteilen, jeweils bezogen auf 100 Gewichtsteile Organosiliciumverbindung (A).

Zusätzlich zu den oben beschriebenen Komponenten (A), (B) und gegebenenfalls (C) können die erfindungsgemäßen Massen nun alle weiteren Stoffe enthalten, die auch bisher in durch Kondensationsreaktion vernetzbaren Massen eingesetzt worden sind, wie z.B. Härtungsbeschleuniger (D), Weichmacher (E), Füllstoffe (F), die verschieden zu Komponente (B) sind, Haftvermittler (G) und Additive (H).

Als Härtungsbeschleuniger (D) können alle Härtungsbeschleuniger, die auch bisher in durch Kondensationsreaktion vernetzbare Massen eingesetzt werden, verwendet werden. Beispiele für Härtungsbeschleuniger (D) sind organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen, wie Tetraethoxysilan, wobei organische Zinnverbindungen bevorzugt sind, besonders bevorzugt Di-n-butylzinndiacetat und Dibutylzinnoxid in Tetraethylsilikat-Hydrolysat, insbesondere Di-n-butylzinnoxid in Tetraethylsilikat-Hydrolysat.

Falls die erfindungsgemäßen Massen Härtungsbeschleuniger (D) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile Bestandteil (A).

Beispiele für Weichmacher (E) sind bei Raumtemperatur flüssige, durch Trimethylsiloxygruppen endblockierte Dimethylpolysiloxane, insbesondere mit Viskositäten bei 25°C im Bereich zwischen 20 und 5000 mPas, bei Raumtemperatur und Umgebungsdruck flüssige Organopolysiloxane, die im Wesentlichen aus -SiO_{3/2}-, -SiO_{2/2}-und ≡SiO_{1/2}-Einheiten, sogenannte T-, D- und M-Einheiten, bestehen, sowie hochsiedende Kohlenwasserstoffe, wie zum Beispiel Paraffinöle oder Mineralöle bestehend im wesentlichen aus naphthenischen und paraffinischen Einheiten.

Bevorzugt handelt es sich bei Weichmacher (E) um lineare Polydimethylsiloxane mit Trimethylsilylendgruppen.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organosiliciumverbindung (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide gro-βer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls Füllstoffe (F) mit chemisch behandelter Oberfläche eingesetzt werden soll, ist als Behandlungsmittel Stearinsäure bevorzugt auszuschließen.

Falls Füllstoffe (F) eingesetzt werden, handelt es sich bevorzugt um hydrophile oder hydrophobe, pyrogen hergestellte Kieselsäure.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organosiliciumverbindung (A).

Beispiele für die in den erfindungsgemäßen Massen eingesetzten Haftvermittler (G) sind Silane und Organopolysiloxane mit funktionellen Gruppen, wie beispielsweise solche mit Glycidoxypropyl-, Aminoalkyl, Aminoethylaminoalkyl- oder Methacryloxypropylresten. Falls jedoch bereits eine andere Komponente, wie etwa Organosiliciumverbindung (A) oder Vernetzer (C) die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 0,1 bis 20 Gewichtsteilen, insbesondere 0,2 bis 5 Gewichtsteilen, jeweils bezogen auf 100 Gewichtsteile Organosiliciumverbindung (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Fungizide, Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren, Scavenger, wie Si-N enthaltende Silazane oder Silylamide, Cokatalysatoren, wie Lewis- und Brönstedsäuren, z.B. Sulfonsäuren, Phosphorsäuren, Phoshorsäureester, Phosphonsäuren und Phosphonsäureester, Thixotropiermittel, wie beispielsweise Phosphorsäureester, organischen Lösungsmittel, wie Alkylaromaten, sowie beliebige Siloxane, die unterschiedlich zu Komponente (A) sind.

Beispiele für Siloxane, die als Komponente (H) eingesetzt werden können, sind solche aus Einheiten der Formel (I), die pro Molekül genau einen Rest Y enthalten, wie z.B. Monohydroxydiorganopolysiloxane. Solche monofunktionellen Siloxane werden bevorzugt zur Steuerung des Moduls eingesetzt.

Bevorzugt als Additive (H) sind Phosphonsäuren und Phosphonsäureester, Farbstoffe und Fungizide.

Falls die erfindungsgemäßen Massen Additive (H) enthalten, was bevorzugt ist, handelt es sich um Mengen von vorzugsweise 0,01 bis 100 Gewichtsteile, besonders bevorzugt 0,1 bis 30 Gewichtsteilen, insbesondere 0,3 bis 10 Gewichtsteilen, jeweils bezogen auf 100 Gewichtsteile Organosiliciumverbindung (A).

Insbesondere bevorzugt handelt es sich bei den erfindungsgemä-βen Massen um solche, die aus
(A) Organosiliciumverbindungen enthaltend Einheiten der Formel (I),
(B) feinteiliger Marmor,
   gegebenenfalls
(C) Vernetzer der Formel (III),
   gegebenenfalls
(D) Härtungsbeschleuniger,
   gegebenenfalls
(E) Weichmacher,
   gegebenenfalls
(F) Füllstoffe,
   gegebenenfalls
(G) Haftvermittler und
   gegebenenfalls
(H) Additive
   bestehen.

Bei den erfindungsgemäßen Massen handelt es sich bevorzugt um zähflüssig bis pastöse Massen.

Zur Bereitung der erfindungsgemäßen Massen können alle Bestandteile in beliebiger Reihenfolge miteinander vermischt werden. So können insbesondere Organosiliciumverbindung (A), Vernetzer (C) und Weichmacher (E) vorgemischt werden, bevor feinteiliger Marmor (B) und Füllstoff (F) eingemischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser durchgeführt werden. Auch das direkte Zumischen von Wasser oder wasserhaltigen Substanzen ist möglich.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasserund Luftfahrzeugen. oder als Klebstoffe oder Verkittungsmassen, z.B. im Fensterbau oder bei der Herstellung von Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen oder von gummielastischen Formkörpern sowie für die Isolierung von elektrischen oder elektronischen Vorrichtungen.

Die erfindungsgemäßen Massen haben den Vorteil, dass sie leicht herzustellen sind und sich durch eine sehr hohe Lagerstabilität auszeichnen.

Des Weiteren haben die erfindungsgemäßen Massen den Vorteil, dass sie eine sehr gute Handhabbarkeit bei der Anwendung zeigen und bei einer Vielzahl von Applikation ausgezeichnete Verarbeitungseigenschaften zeigen.

Die erfindungsgemäßen vernetzbaren Massen haben den Vorteil, dass sie auf einer Vielzahl von Untergründen sehr gut haften.

Ferner haben die erfindungsgemäßen Massen den Vorteil, dass sie im ausgehärteten Zustand durch einen niedrigen Modul gekennzeichnet sind.

In den nachstehend beschriebenen Beispielen beziehen sich alle Viskositätsangaben, sofern nicht anders angegeben, auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Die Ölzahl wurde gemäß ISO787/5 bestimmt.

Die Shore-A-Härte wurde gemäß ISO 868 bestimmt.

### Beispiel 1

300 g eines Polydimethylsiloxangemischs, bei dem die Siloxane mit Dimethoxymethylsilyl- und Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 300 000 mPa·s, 180 g eines trimethylsilylendblockierten Polydimethylsiloxans mit einer Viskosität von 1000 mPa·s, 25 g Methyltrimethoxysilan und 20 g eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, werden in einem Planetenmischer miteinander gemischt und 15 Minuten gerührt. Anschließend wird der Ansatz durch homogenes Einmischen von 240 g gemahlenem Metacarbonat mit einem mittleren Teilchendurchmesser von ca. 2,6 µm, einem Calciumcarbonatanteil von 98 % und einer Ölzahl von 20 g/100g (käuflich erhältlich unter dem Handelsnamen "Saxolith 2 HE" von GEOMIN Erzgebirgische Kalkwerke GmbH, Deutschland), 40 g hydrophiler, pyrogener Kieselsäure mit einer spezifischen Oberfläche von 150 m²/g (käuflich erhältlich unter der Bezeichnung HDK® V 15 bei der Wacker Chemie AG, D-München), 1,5 g Octylphosphonsäure und 2,8 g eines Zinnkatalysators, der hergestellt wird durch Umsetzung von Di-n-butylzinndiacetat und Tetraethoxysilan, vervollständigt.

Die so hergestellte Masse wurde zur Aufbewahrung in feuchtigkeitsdichte Gebinde abgefüllt und zur Beschleunigung der Alterungsprozesse in diesen Gebinden 10 Tage bei 100°C gelagert.

Die Masse wies 7 Tage nach der Herstellung eine Hautbildungszeit von 7 Minuten auf (25°C, 50 % relative Luftfeuchtigkeit) und härtete innerhalb von 7 Tagen (25°C, 50 % relative Luftfeuchtigkeit) zu gummielastischem Material mit einer Shore-A-Härte von 17 aus.

Nach Lagerung der feuchtigkeisdichten Gebinde über 10 Tage bei 100°C wurde eine Hautbildungszeit von 18 Minuten (25°C, 50 % relative Luftfeuchtigkeit) gemessen. Die so gelagerte Masse härtete innerhalb von 7 Tagen (25°C, 50 % relative Luftfeuchtigkeit) zu klebfreiem, gummielastischen Material mit einer Shore-A-Härte von 10 aus.

### Beispiel 2

Die in Beispiel 1 beschriebene Verfahrensweise wird wiederholt mit der Abänderung, dass anstelle von 240 g gemahlenem Metacarbonat mit einem mittleren Teilchendurchmesser von ca. 2,6 µm, einem Calciumcarbonatanteil von 98 % und einer Ölzahl von 20 g/100g (käuflich erhältlich unter dem Handelsnamen "Saxolith 2 HE" von GEOMIN Erzgebirgische Kalkwerke GmbH, Deutschland) 240 g gemahlenes Metacarbonat mit einem mittleren Teilchendurchmesser von ca. 5,0 µm, einem Calciumcarbonatanteil von 98 % und einer Ölzahl von 16 g/100g (käuflich erhältlich unter dem Handelsnamen OMYACARB® 5-GU von Omya GmbH, D-Köln) eingesetzt wird.

Die so erhaltene Masse wies 7 Tage nach der Herstellung eine Hautbildungszeit von 5 Minuten auf (25°C, 50 % relative Luftfeuchtigkeit) und härtete innerhalb von 7 Tagen (25°C, 50 % relative Luftfeuchtigkeit) zu gummielastischem Material mit einer Shore-A-Härte von 21 aus.

Nach Lagerung der feuchtigkeisdichten Gebinde über 10 Tage bei 100°C wurde eine Hautbildungszeit von 10 Minuten (25°C, 50 % relative Luftfeuchtigkeit) gemessen. Die so gelagerte Masse härtete innerhalb von 7 Tagen (25°C, 50 % relative Luftfeuchtigkeit) zu klebfreiem, gummielastischen Material mit einer Shore-A-Härte von 12 aus.

### Beispiel 3

Die in Beispiel 1 beschriebene Verfahrensweise wird wiederholt mit der Abänderung, dass anstelle von 240 g gemahlenem Metacarbonat mit einem mittleren Teilchendurchmesser von ca. 2,6 µm, einem Calciumcarbonatanteil von 98 % und einer Ölzahl von 20 g/100g (käuflich erhältlich unter dem Handelsnamen "Saxolith 2 HE" von GEOMIN Erzgebirgische Kalkwerke GmbH, Deutschland) 240 g gemahlenes Metacarbonat mit einem mittleren Teilchendurchmesser von ca. 2,0 µm, einem Calciumcarbonatanteil von 98 % und einer Ölzahl von 18 g/100g (käuflich erhältlich unter dem Handelsnamen "CARBITAL 110" von Imerys Minerals Ltd., England) eingesetzt wird.

Die so erhaltene Masse wies 7 Tage nach der Herstellung eine Hautbildungszeit von 8 Minuten auf (25°C, 50 % relative Luftfeuchtigkeit) und härtete innerhalb von 7 Tagen (25°C, 50 % relative Luftfeuchtigkeit) zu gummielastischem Material mit einer Shore-A-Härte von 23 aus.

Nach Lagerung der feuchtigkeisdichten Gebinde über 10 Tage bei 100°C wurde eine Hautbildungszeit von 11 Minuten (25°C, 50 % relative Luftfeuchtigkeit) gemessen. Die so gelagerte Masse härtete innerhalb von 7 Tagen (25°C, 50 % relative Luftfeuchtigkeit) zu klebfreiem, gummielastischen Material mit einer Shore-A-Härte von 11 aus.

### Vergleichsbeispiel 1

Die in Beispiel 1 beschriebene Verfahrensweise wird wiederholt mit der Abänderung, dass anstelle von 240 g gemahlenem Metacarbonat mit einem mittleren Teilchendurchmesser von ca. 2,6 µm, einem Calciumcarbonatanteil von 98 % und einer Ölzahl von 20 g/100g (käuflich erhältlich unter dem Handelsnamen "Saxolith 2 HE" von GEOMIN Erzgebirgische Kalkwerke GmbH, Deutschland) 240 g gefällte, mit Stearinsäure chemisch behandelte Kreide mit einem mittleren Teilchendurchmesser von ca. 0,04 µm und einer BET-Oberfläche von 22 m²/g, (käuflich erhältlich unter dem Handelsnamen "WINNOFIL SPM" von Solvay Soda Deutschland GmbH, D-Rheinberg) eingesetzt wird.

Die so erhaltene Masse wies 7 Tage nach der Herstellung eine Hautbildungszeit von 7 Minuten auf (25°C, 50 % relative Luftfeuchtigkeit) und härtete innerhalb von 7 Tagen (25°C, 50 % relative Luftfeuchtigkeit) zu gummielastischem Material mit einer Shore-A-Härte von 28 aus.

Bereits nach nur 5 Tagen Lagerung der feuchtigkeisdichten Gebinde bei 100°C härtete die Masse nicht mehr zu einem klebfreiem Material aus; die Shore-A-Härte konnte nicht mehr bestimmt werden.

## Patentansprüche

1. Durch Kondensationsreaktion vernetzbare Massen herstellbar unter Verwendung von
(A) Organosiliciumverbindung mit mindestens zwei kondensationsfähigen Gruppen der Formel
RₐY_{b}SiO_{(4-a-b)/2} (I),
wobei
R gleich oder verschieden sein kann und gegebenenfalls substituierte Kohlenwasserstoffreste, die durch Sauerstoffatome unterbrochen sein können, bedeutet,
Y gleich oder verschieden sein kann und Hydroxylrest oder Rest -OR¹ bedeutet,
R¹ gegebenenfalls substituierte Kohlenwasserstoffreste,
die durch Sauerstoffatome unterbrochen sein können, bedeutet,
a 0, 1, 2 oder 3 ist und
b 0, 1, 2 oder 3 ist,
mit der Maßgabe, dass die Summe aus a+b kleiner oder gleich 4 ist und pro Molekül mindestens zwei Reste Y anwesend sind,
(B) feinteiliges Metacarbonat mit einem mittleren Teilchendurchmesser vom 0,1 bis 30 µm und gegebenenfalls
(C) Vernetzer.

2. Vernetzbare Massen gemäß Anspruch 1, **dadurch gekennzeichnet, dass** Komponente (B) einen Gehalt an Calciumcarbonat von mindestens 90 Gew.-% aufweist.

3. Vernetzbare Massen gemäß einem oder mehreren der Ansprüche 1 bis 2, **dadurch gekennzeichnet, dass** Komponente (B) eine spezifische Oberfläche von höchstens 15 m²/g aufweist.

4. vernetzbare Massen gemäß einem oder mehreren der Ansprüche 1 bis 3, **dadurch gekennzeichnet, dass** Komponente (B) eine Ölzahl (ISO 787/5) von mehr als 1 g/100 g aufweist.

5. Vernetzbare Massen gemäß einem oder mehreren der Ansprüche 1 bis 4, **dadurch gekennzeichnet, dass** Komponente (B) in Mengen von 1 bis 500 Gewichtsteilen, bezogen auf 100 Gewichtsteile Organosiliciumverbindung (A), eingesetzt wird.

6. Formkörper, hergestellt durch Vernetzung der Massen gemäß einem oder mehreren der Ansprüche 1 bis 5.

## Claims

1. Compositions crosslinkable via a condensation reaction and that can be prepared using
(A) organosilicon compound having at least two condensable groups of the formula
RₐY_{b}SiO_{(4-a-b)/2} (I)
where
R can be identical or different and means unsubstituted or substituted hydrocarbon radicals which may have interruption by oxygen atoms,
Y can be identical or different and means a hydroxy radical or -OR¹ radical,
R¹ means unsubstituted or substituted hydrocarbon radicals which may have interruption by oxygen atoms,
a is 0, 1, 2 or 3, and
b is 0, 1, 2 or 3,
with the proviso that the sum of a and b is less than or equal to 4 and at least two Y radicals are present per molecule,
(B) fine-particle metacarbonate whose average particle diameter is from 0.1 to 30 µm, and if appropriate,
(C) crosslinking agent.

2. Crosslinkable compositions according to Claim 1, **characterized in that** the calcium carbonate content of component (B) is at least 90% by weight.

3. Crosslinkable compositions according to one or more of Claims 1 to 2, **characterized in that** the specific surface area of component (B) is at most 15 m²/g.

4. Crosslinkable compositions according to one or more of Claims 1 to 3, **characterized in that** the oil absorption value (ISO 787/5) of component (B) is more than 1 g/100 g.

5. Crosslinkable compositions according to one or more of Claims 1 to 4, **characterized in that** the amounts used of component (B) are from 1 to 500 parts by weight, based on 100 parts by weight of organosilicon compound (A).

6. Moulding, produced via crosslinking of the compositions according to one or more of Claims 1 to 5.

## Revendications

1. Masses réticulables par une réaction de condensation, pouvant être préparées avec utilisation
(A) d'un composé organosilicié présentant au moins deux groupes condensables de formule
RₐY_{b}SiO_{(4-a-b)/2} (I),
où
R peut être identique ou différent et signifie des radicaux hydrocarbonés, le cas échéant substitués, qui peuvent être interrompus par des atomes d'oxygène,
Y peut être identique ou différent et signifie un radical hydroxyle ou radical-OR¹,
R¹ signifie des radicaux hydrocarbonés le cas échéant substitués, qui peuvent être interrompus par des atomes d'oxygène,
a vaut 0, 1, 2 ou 3 et
b vaut 0, 1, 2 ou 3,
à condition que la somme de a + b soit inférieure ou égale à 4 et qu'il existe au moins deux radicaux Y par molécule,
(B) de métacarbonate finement divisé présentant un diamètre moyen des particules de 0,1 à 30 µm et
le cas échéant
(C) d'un réticulant.

2. Masses réticulables selon la revendication 1, **caractérisées en ce que** le composant (B) présente une teneur en carbonate de calcium d'au moins 90% en poids.

3. Masses réticulables selon l'une ou plusieurs des revendications 1 à 2, **caractérisées en ce que** le composant (B) présente une surface spécifique d'au plus 15 m²/g.

4. Masses réticulables selon l'une ou plusieurs des revendications 1 à 3, **caractérisées en ce que** le composant (B) présente un indice d'huile (ISO 787/5) supérieur à 1 g/100 g.

5. Masses réticulables selon l'une ou plusieurs des revendications 1 à 4, **caractérisées en ce que** le composant (B) est utilisé en des quantités de 1 à 500 parties en poids, par rapport à 100 parties en poids de composé organosilicié (A).

6. Corps façonnés, préparés par réticulation des masses selon l'une ou plusieurs des revendications 1 à 5.
